# EUROPÄISCHE PATENTSCHRIFT

(11) **EP 1 102 038 B1**
(45) Veröffentlichungstag und Bekanntmachung des Hinweises auf die Patenterteilung: **11.06.2003**
(21) Anmeldenummer: 00124268.4
(22) Anmeldetag: 13.11.2000
(51) Int. Cl.: G01C 23/00

(54) **Darstellung für ein Flugführungs-Display**
Presentation for a flight guidance display
Présentation pour une visualisation de gestion de vol

(30) Priorität: 19.11.1999 DE 19955664
(43) Veröffentlichungstag der Anmeldung: 23.05.2001
(73) Patentinhaber: EADS Deutschland GmbH, 85521 Ottobrunn (DE)
(72) Erfinder: Seifert, Jost, 81927 München (DE)

(56) Entgegenhaltungen:
- EP-A- 0 418 558
- US-A- 5 420 582
- US-A- 5 798 713

## Beschreibung

Die Erfindung betrifft ein Flugführungs-Display zur Anwendung in Flugzeug-Cockpit und in Flugzeug-Simulationssystemen, insbesondere ein Display zur Anzeige einer künstlichen Sicht von der Außenwelt.

Für Flugführungs-Anwendungen sind Displays mit künstlicher Sicht bekannt, bei der die Außenwelt mehr oder weniger detailliert dargestellt ist. Die der Darstellung zugrundeliegende Blickrichtung ist dabei beispielsweise nach der DE 4314811 A1 in Richtung der Längsachse des realen oder simulierten Flugzeugs gelegen. In anderen Anwendungsfällen kann die Blickrichtung zur Darstellung der künstlichen Sicht auch wählbar sein. In speziellen Anwendungen ist die Blickrichtung zur Darstellung der künstlichen Sicht mit der Kopf- oder sogar mit der Augenbewegung des Piloten gekoppelt, um ihn auf direktem Wege diejenigen Bereiche der Außenwelt darzustellen, die für ihn unmittelbar von Interesse sind.

Nachteilig an diesen Darstellungsweisen ist, daß flugzeugspezifische Daten, wie z.B. Flugzustandsgrößen, im operationellen Einsatz jederzeit berücksichtigt und kontrolliert werden müssen. Dies kann in Flugphasen mit großen Manövrierleistungen oder hohen Missionsanforderungen zur Überlastung des Piloten führen, da er gleichzeitig flugzeugspezifische Parameter, die größtenteils kritische Größen sein können, sowie Randbedingungen der Außenwelt zu berücksichtigen sind.

Aus der DE 3904077 C1 ist eine Darstellung bekannt, die dem Piloten eine Orientierung im Raum beim Flug mit hohen Anstellwinkeln und zugleich Lageinformationen geben soll.

Aus der Offenbarung der US-A 5,798,713 sowie der US-A-5,420,582 ist eine Flugführungs-Darstellung bekannt, die von den Orientierungen des Flugzeugs im Raum, d.h. aus dem flugzeugfesten Koordinatensystem abgeleitet wird. Dabei kommen im einzelnen zur Darstellung:
- Der Nickwinkel aufgrund des Abstands des Bildmittelpunktes zum Horizont, wobei die Abstandsrichtung das Lot auf den Horizont ist und der Abstand sich aus dem Flugwind-Neigungswinkel γ_{*a*} zuzüglich dem Anstellwinkel α ergibt;
- der Roll-Lagenwinkel, der der Verdrehung der Horizontlinie im Bildschirm oder deren Querneigung entspricht;
- der Gierwinkel oder Lage-Azimutwinkel aufgrund der Lage der Gitternetz-Linien.

Die Darstellung nach der der US-A 5,798,713 sowie der US-A-5,420,582 bezieht sich auf die Lage des Flugzeugs im Raum. Dabei wird die Darstellung eines Geländes beschrieben, die die Orientierung des Flugzeugs im Raum bezüglich des Horizonts zeigt. Die Landschaft wird dabei ebenfalls nach den Eulerwinkeln, also aufgrund der Lage des Flugzeugs im Raum, dargestellt. Auch wird ein für die Zukunft vorhergesagter Flugpfad wird mittels diskreter Dreiecks-Scheiben jedoch immer aus der momentanen Pilotensicht dargestellt. Die Dreiecks-Scheiben wandern aus Sicht des Piloten beispielsweise nach rechts aus dem Bildschirm, wenn das Flugzeug nach links schiebt. Diese werden gebildet aus mehreren Flugzeugpositionen und Lagewinkeln in bezug auf das Gelände, die ausgehend von der aktuellen Situation (Flugzustand, Piloteneingabe) erreicht werden.

Bei der der US-A 5,798,713 sowie der US-A-5,420,582 hat der Betrachter eine Blickrichtung, die entlang der momentanten Flugzeuglängsachse gerichtet ist. Die Darstellung des Geländes erfolgt über die Lagen des Flugzeugs im Raum, so daß sich die Darstellung des Geländes aus der relevanten Lage des geodätischen Koordinatensystems zum flugzeugfesten Koordinatensystem ergibt.

Es ist daher die Aufgabe der Erfindung, ein Flugführungs-Display für Simulationsanwendungen und dem operationellen Einsatz zu schaffen, mit dem der Pilot gleichzeitig Informationen der Außenwelt sowie flugspezifische Zustandsgrössen möglichst ergonomisch erfassen kann.

Die Aufgabe wird bei einem Gegenstand nach dem Oberbegriff des Patentanspruchs 1 mit den Merkmalen des kennzeichnenden Teils desselben gelöst. Alternative Ausführungsformen sind in den Unteransprüchen angegeben.

Durch das Hineinprojizieren einer Darstellung des eigenen bzw. simulierten Flugzeugs in die Landschaftsbasis wird eine künstliche Sicht erreicht, bei der Kopplungen zwischen verschiedenen Bewegungsachsen, beispielsweise die Kopplung der Roll-Gier-Schwingung, erkennbar sind, ohne daß der Pilot eine solche Kopplung aus anderen Anzeigeelementen ableiten muß. Dadurch kann der Pilot meist ohne große gedankliche Zwischenschritte Gegenmaßnahmen einleiten bzw. Manövergrenzen erkennen. Hilfreich ist dabei die erfindungsgemäß vorgesehene Darstellung der Ruderausschläge, da der Pilot auf anschauliche Weise die Reaktion des Flugzeugs auf Ruderausschläge erfährt.

Bei modernen Flugzeugen, die eine Flugsteuerung mit Hilfe eines Computers (FCC) besitzen, ist der Ruderausschlag nicht mehr allein von der Piloteneingabe, sondern auch vom Flugzustand abhängig. Durch die gleichzeitige Darstellung der Ruderauschläge und des Flugzustandes in dem erfindungsgemäßen Display, wird dem Entwicklungsingenieur der Flugregelungssoftware die Möglichkeit gegeben, Zusammenhänge unmittelbar zu erkennen.

Durch das erfindungsgemäße Flugführungs-Display wird eine Darstellung erreicht, bei der die Flugbahn vom flugzeugfesten Koordinatensystem entkoppelt dargestellt ist, d.h. der Pilot kann in einer Darstellung jeweils für sich die Koordinatenachsen der Flugbahn, die flugzeugfesten Koordinatenachsen sowie die zwischen diesen Koordinatenachsen liegenden Strömungswinkel (Anstell- und Schiebewinkel) wahrnehmen.

Ein weiterer Vorteil des erfindungsgemäßen Displays, ist die geringe erforderliche Bildschirmdiagonale. Denn die Blickrichtung des Piloten verläuft im Normalfall in Flugrichtung, und diese liegt hier immer in Bildschirmmitte. Der Bildschirmausschnitt herkömmlicher Displays hat in der Bildschirmmitte die verlängerte Flugzeuglängsachse. Bei hohen Anstell- oder Schiebewinkeln weicht somit die Mitte des Bildschirmausschnittes stark von der Flugbahn ab, und erfordert somit eine größere Bildschirmdiagonale um auch noch die Landschaft in Flugrichtung darzustellen.

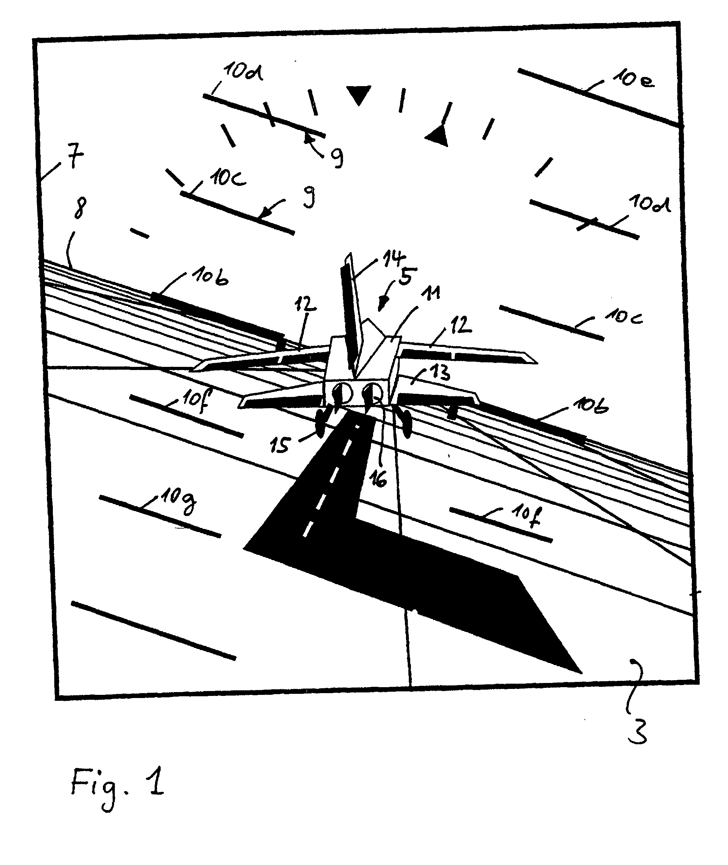

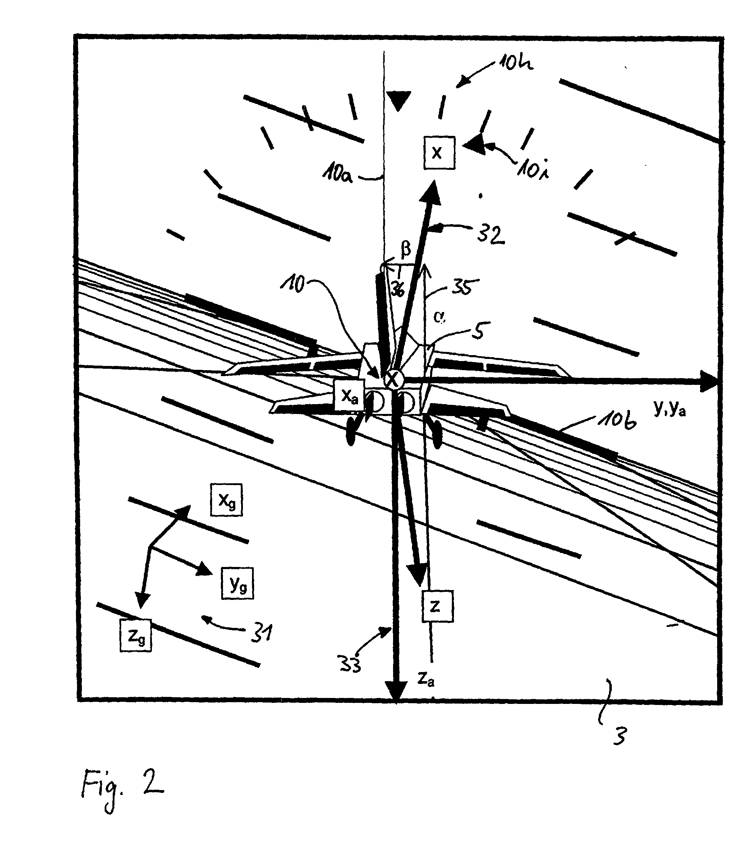

Im folgenden wird die Erfindung anhand der Fig. 1 und 2 beschrieben, die zeigen:
- Fig. 1: die Momentaufnahme einer vereinfacht dargestellten Ausführungsform der erfindungsgemäßen Darstellungsweise eines Flugzustands für ein Flugführungs-Display, die einen Flugzustand darstellt, bei der sich das simulierte oder fliegende Flugzeug im Landeanflug befindet,
- Fig. 2: die Ausführungsform des Flugführungs-Displays nach der Fig. 1 mit zusätzlichen, nur zur Erläuterung desselben vorgesehenen Eintragungen.

Die erfindungsgemäße Darstellungsweise für ein Flugführungs-Display nach der Fig. 1 beinhaltet die Darstellung eines Geländes 3, die Darstellung eines Flugzeugs 5 als Flächenmodell, einen in einer ersten Farbe - d.h. in schwarz - dargestellten und in eine zweite Farbe veränderlichen Rahmen 7. Das Gelände 3 kann als Schachbrettmuster ausgeführt sein (Fig. 1) oder eine dreidimensionale Darstellung des Geländes umfassen. Vorzugsweise sind im Gelände wesentliche Bezugspunkte für den simulierten Flug bzw. dem operationellen Einsatz dargestellt, beispielsweise Flugplätze oder Funkanlagen. Die Darstellung des Geländes 3 umfaßt einen Horizont 8, sofern dieser bei dem jeweiligen Flugzustand im jeweils dargestellten Bildausschnitt gelegen ist. Der Betrachter des erfindungsgemäßen Displays blickt in die Richtung der momentanen Flugbahn des fliegenden bzw. simulierten Flugzeugs 5. In dem erfindungsgemäßen Flugführungs-Display ist eine Bahnneigungswinkel-Leiter (englisch: gamma (γ)-ladder) 9, im folgenden kurz Leiter genannt, eingetragen. Das Flugzeug 5 ist mit einem zentralen Bezugspunkt 10, vorzugsweise mit seinem Schwerpunkt in der Bildschirm-Mitte oder zumindest auf der vertikalen Symmetrielinie 10a des Bildschirms angeordnet. Eine Referenzlinie 10b der Leiter 9 verläuft entlang des Horizonts 8. Von dieser Referenzlinie 10b ausgehend werden in vertikaler Richtung und in gleichbleibenden Abständen voneinander weitere Linien 10c, 10d, 10e, 10f, 10g parallel zur Referenzlinie 10b angeordnet. Der Flugwindhängewinkel wird mit Hilfe einer Skalendarstellung 10h und eines Zeigers 10i zur Anzeige des momentanen Flugwindhängewinkels in der oberen Bildschirmhälfte dargestellt.

Das Flugzeug 5 ist erfindungsgemäß mit einem Rumpf 11, Tragflügeln 12, Höhenleitwerk 13, Seitenleitwerk 14, Fahrwerk 15 - soweit dieses ausgefahren ist- und Düsen 16 dargestellt. Vorzugsweise sind sämtliche Steuerflächen des Flugzeugs 5 sowie gegebenenfalls auch die Schubvektor-Steuerflächen im Display eingetragen. Das Höhenleitwerk 13, das Seitenleitwerk 14, das Fahrwerk 15, die Düsen 16 können bei vereinfachten Darstellungen oder auch abhängig vom Flugzeugtyp auch weggelassen werden. Die jeweils primären Steuerflächen, wie z.B. Querruder, Seitenruder, Höhenruder des Flugzeugs, werden - soweit vorhanden - am Flugzeug 5 zur Darstellung gebracht. Es können auch sekundäre Steuerflächen, z.B. Bremsklappen, Landeklappen sowie deren Positionen zur Darstellung gebracht werden. Für den Fall, daß das Fahrwerk 15 eingezogen ist, wird das Fahrwerk 15 im Flugführungs-Display nicht dargestellt. Die Düsen 16 können mit verschiedenen Helligkeiten oder Farben dargestellt werden, um die Größe des Triebwerksschubs anzuzeigen. Beispielsweise könnte eine schwarze Darstellung der Düsen 16 bedeuten, daß die Triebwerke ausgeschaltet sind, eine weiße Farbe derselben, das maximaler Trockenschub vorliegt und eine gelbe Farbe der Düsen 16, das maximaler Schub mit Nachbrenner vorliegt.

Steuerklappen an den Tragflügeln 12 sowie am Vorflügel oder Hochauftriebsklappen, können mit bestimmten Farben oder Helligkeiten ohne Darstellung der Tragflügel 12 abgehoben werden. Bei Bewegungen der Stellflächen und der Vorflügel und Hochauftriebsklappen verändert sich auch die Größe der flächigen Projektion derselben im Flugführungsdisplay. In entsprechender Weise kann der Pilot schematisch die Stellung der Steuerflächen und ggf. der Hochauftriebsklappen und Vorflügel erkennen. Analog dazu kann auch die Stellung des Höhenleitwerks 13 bzw. deren Steuerflächen zur Darstellung gebracht werden. Bewegt sich beim realen Flugzeug, das zu fliegen oder zu simulieren ist, z.B. das Höhenleitwerk 13 zur Steuerung des Flugzeugs als Ganzes, so verändert sich bei Bewegung des Höhenleitwerks 13 lediglich die Größe der projizierten Höhenruderfläche im Flugführungs-Display. Bei Darstellungen von Flugzeugen mit veränderlicher Flügelgeometrie kann die momentan eingestellte Pfeilung der Tragflügel ebenfalls durch Veränderung der auf das Display projizierten Fläche der Tragflügel 12 dargestellt werden.

Um die Funktionsweise der erfindungsgemäßen Darstellungen im Flugführungs-Display im Zusammenhang mit Veränderungen des Flugzustandes und insbesondere der Fluglagen des dargestellten Flugzeugs zu erläutern, sind in Fig. 2 ein geodätisches Koordinatensystem 31 mit den Achsen X_{g}, Y_{g}, Z_{g} sowie ein flugzeugfestes Koordinatensystem 32 mit den Achsen X, Y, Z dargestellt. Als weitere Hilfsvektoren sind in der Fig. 2 noch das aerodynamische Achsensystem 33 mit den Achsen Xₐ, Yₐ, Zₐ dargestellt. Im folgenden wird von den Definitionen der Koordinatensysteme sowie der zwischen diesen gelegenen Drehwinkel ausgegangen, wie sie in der DIN-Norm 9300, Teil 1vom Oktober 1990 vorgenommen worden sind. Die genannten Koordinatensysteme sind im realen Display nach der Erfindung nicht direkt dargestellt, sie lassen sich jedoch indirekt aus der Darstellung des Geländes 3 und des Flugzeugs 5 sowie deren Orientierungen indirekt der Darstellung entnehmen.

Bei normalen Bedingungen herrscht eine in Richtung und Größe zeitveränderliche Anströmung vor, so daß das für den Piloten entnehmbare flugzeugfeste Koordinatensystem 32 im Normalfall von dem entnehmbaren aerodynamischen Achsensystem 33 abweicht, wie es auch in der Fig. 2 dargestellt ist. In entsprechender Weise gehen aus den Winkeln, mit denen das flugzeugfeste Koordinatensystem 32 zum aerodynamischen Achsensystem 33 verdreht ist, der momentane Anström- oder Anstellwinkel 35 und der Schiebewinkel 36 des dargestellten Flugzeugs 5 hervor. Bei der Hilfs-Darstellung für ein Flugführungs-Display befindet sich das Zentrum des aerodynamischen Achsensystems 33 in der Displaymitte, wobei dessen Xₐ-Achse, die den Flugrichtungsvektor symbolisiert, senkrecht auf dem Bildschirm, die Yₐ-Achse horizontal nach rechts (vom Beobachter aus gesehen), und die Zₐ-Achse zur Orientierung des Piloten nach unten zeigen. Bei der erfindungsgemäßen Darstellung sind die (nicht sichtbaren) Achsen des aerodynamischen Koordinatensystems jedem Flugzustand sowie der Bahnpunkte der Flugbahn in dieser Richtung gelegen. Bei Verringerung des Anstellwinkels verringert sich auch in der erfindungsgemäßen Displaydarstellung der vertikale Winkel, in dem der Betrachter das Flugzeug 5 in bezug auf dessen Längsachse sieht, und umgekehrt. Analog zum Anstellwinkel 35 ist der Schiebewinkel 36 entnehmbar, d.h. die horizontale Abweichung der Blickrichtung zur Flugzeug-Längsachse. Durch die unmittelbare Entnehmbarkeit von Anstellwinkel 35 und Schiebewinkel 36 können flugmechanische Zusammenhänge der Darstellung sofort entnommen werden. Hierzu gehören insbesondere der Anstellwinkel- und Schiebewinkel selbst, die Lage des Flugzeugs 5 im Raum, sowie auch flugmechanische Bewegungsformen wie die Roll-Gier-Kopplung. Der Pilot kann durch diese Darstellungsweise sofort die zur Steuerung maßgebliche Flugsituation erkennen. Die Erkennbarkeit resultiert daraus, daß das geodätische 31 und das aerodynamische 33 Koordinatensystem der Display-Darstellung entnehmbar ist. Die Verdrehung der Koordinatensysteme 31, 33 zueinander lassen der erfindungsgemäßen Darstellung den Flugwind-Azimuthwinkel, den Flugwind-Neigungswinkel und den Flugwind-Hängewinkel entnehmen. Fliegt das Flugzeug 5 eine Kurve, so verändert sich die Lage des flugzeugfesten Koordinatensystems 32 relativ zum geodätischen Koordinatensystem 31. Durch die Lagen, die das flugzeugfeste Koordinatensystem 32 relativ zum geodätischen Koordinatensystem 31 hat, kann der Pilot unmittelbar die Lage des Flugzeugs im Raum erkennen.

Das Flugführungs-Display ist für den Betrachter immer so ausgerichtet, daß die Blickrichtung des Betrachters in Flugrichtung Xₐ verläuft, d.h. der Flugwindachse entgegengerichtet ist. Diese entspricht in der Hilfs-Darstellung der Fig. 2 dem Bezugspunkt 10. Bei Abweichungen der Längsrichtung des Flugzeugs 5 von der Bahnachse, also bei der Veränderung des Anstell- und Schiebewinkels, ergibt sich eine entsprechende Verdrehung des flugzeugfesten Koordinatensystems 32 zum aerodynamischen Achsensystem 33. Auf dem Display wird dadurch auch das Flugzeug 5 gedreht. Das Flugzeug 5 wird also mit einer Abweichung seiner Längsachse von der Blickrichtung des Beobachters dargestellt, wenn dieses nicht genau in Flugrichtung gerichtet ist.

Bei Vergrößerung des Bahnneigungswinkels sinkt der Horizont 9 im Flugführungsdisplay nach unten. Ab einer bestimmten Größe des Bahnneigungswinkels verschwindet der Horizont 9 aus dem Flugführungsdisplay.

Der Rahmen 7 kann zur Anzeige von Warnungen in einer vorbestimmten Farbe, z.B. rot, verändert werden.

## Patentansprüche

1. Darstellung für ein Flugführungs-Display mit der Darstellung eines Geländes (3) mit einem Horizont (8) und einem Flugzeug-Symbol (5),
**dadurch gekennzeichnet, daß**
das aerodynamische Achsensystem (33) in der Darstellung fix ist, wobei der Betrachter in die Richtung der momentanen Flugbahn (Xₐ-Achse, Flugrichtungsvektor) des dargestellten Flugzeugs (5; flugzeugfestes Koordinatensystem 32) blickt,
das Gelände (3) in Abhängigkeit der momentanen Flugbahn als Schachbrettmuster oder dreidimensional dargestellt ist und dessen aus der Darstellung hervorgehende Orientierung (geodätisches Koordinatensystem 31: X_{G}, Y_{G}, Z_{G}) sich aus der Verdrehung des geodätischen (X_{G}, Y_{G}, Z_{G} ; 31) zum aerodynamischen Koordinatensystem (33) ergibt,
das dargestellte Flugzeug (5; flugzeugfestes Koordinatensystem 32) eine Projektion eines relativ zum aerodynamischen Achsensystem (33) um den momentanen Anstellwinkel (35) und Schiebewinkel (36) gedrehten Flugzeugs ist.

2. Darstellung für ein Flugführungs-Display mit der Darstellung eines Geländes (3) mit einem Horizont (8) und einem Flugzeug-Symbol (5) nach dem Patentanspruch 1, **dadurch gekennzeichnet, daß** das Zentrum des aerodynamischen Achsensystems (33) die Displaymitte ist.

3. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** der Flugwind-Hängewinkel mit Hilfe einer Skalendarstellung (10h) und eines Zeigers (10i) zur Anzeige des momentanen Flugwindhängewinkels in der oberen Bildschirmhälfte dargestellt wird.

4. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** eine Bahnneigungswinkel-Leiter (9) eingetragen ist, wobei eine Referenzlinie (10b) der Bahnneigungswinkel-Leiter (9) entlang des Horizonts (8) verläuft und wobei bei Vergrößerung des Bahnneigungswinkels der Horizont (9) im Flugführungsdisplay nach unten sinkt und ab einer bestimmten Größe des Bahnneigungswinkels der Horizont (9) aus dem Flugführungsdisplay verschwindet.

5. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** in der Darstellung des Geländes wesentliche Orientierungspunke für den Piloten eingetragen sind.

6. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** die primären Steuerflächen des Flugzeugs (5) sowie deren momentane Auslenkungen zur Darstellung gebracht werden.

7. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** zusätzlich sekundäre Steuerflächen sowie deren momentane Stellungen zur Darstellung gebracht werden.

8. Darstellung für ein Flugführungs-Display mit der Darstellung eines Geländes (3) mit einem Horizont (8) und einem Flugzeug-Symbol (5) nach einem der voranstehenden Patentansprüche, **dadurch gekennzeichnet, daß** das Flugführungs-Display zusätzlich einen Rahmen (7) aufweist, der zur Anzeige von Warnungen in eine vorbestimmte Farbe gefärbt wird.

## Claims

1. Representation for a flight guidance display with the representation of a terrain (3) with an horizon (8) and an aircraft symbol (5),
**characterised in that**
the aerodynamic axis system (33) is fixed in the representation, with the observer looking in the direction of the instantaneous flight path (Xₐ axis, flight direction vector) of the represented aircraft (5; aircraft-fixed co-ordinate system 32),
the terrain (3) is represented as a chequerboard pattern or three-dimensionally depending on the instantaneous flight path and its orientation (geodetic co-ordinate system 31: X_{G}, Y_{G}, Z_{G}) resulting from the representation is derived from the rotation of the geodetic co-ordinate system (X_{G}, Y_{G}, Z_{G}; 31) relative to the aerodynamic co-ordinate system (33), and
the represented aircraft (5; aircraft-fixed coordinate system 32) is a projection of an aircraft rotated relative to the aerodynamic axis system (33) about the instantaneous angle of incidence (35) and angle of sideslip (36).

2. Representation for a flight guidance display with the representation of a terrain (3) with an horizon (8) and an aircraft symbol (5) according to claim 1, **characterised in that** the centre of the aerodynamic axis system (33) is the centre of the display.

3. Representation for a flight guidance display with the representation of a terrain (3) with an horizon (8) and an aircraft symbol (5) according to one of the preceding claims, **characterised in that** the flight wind angle of slope is represented in the upper half of the screen with the aid of a scale representation (10h) and an indicator (10i) for displaying the instantaneous angle of bank.

4. Representation for a flight guidance display with the representation of a terrain (3) with an horizon (8) and an aircraft symbol (5) according to one of the preceding claims, **characterised in that** a path inclination angle ladder scale (9) is plotted, wherein one reference line (10b) of the path inclination angle ladder scale (9) runs along the horizon (8) and wherein if the path inclination angle increases the horizon (8) in the flight guidance display moves downwardly, and starting from a specific value of the path inclination angle the horizon (8) disappears from the flight guidance display.

5. Representation for a flight guidance display with the representation of a terrain (3) with an horizon (8) and an aircraft symbol (5) according to one of the preceding claims, **characterised in that** essential orientation points for the pilot are shown in the representation of the terrain.

6. Representation for a flight guidance display with the representation of a terrain (3) with an horizon (8) and an aircraft symbol (5) according to one of the preceding claims, **characterised in that** the primary control surfaces of the aircraft (5) as well as their instantaneous deflections are used in the representation.

7. Representation for a flight guidance display with the representation of a terrain (3) with an horizon (8) and an aircraft symbol (5) according to one of the preceding claims, **characterised in that** additional secondary control surfaces as well as their instantaneous positions are used in the representation.

8. Representation for a flight guidance display with the representation of a terrain (3) with an horizon (8) and an aircraft symbol (5) according to one of the preceding claims, **characterised in that** the flight guidance display additionally comprises a frame (7) that is shaded in a predetermined colour in order to display warnings.

## Revendications

1. Présentation pour un afficheur de pilotage représentant un terrain (3) avec un horizon (8) et un symbole d'avion (5),
**caractérisée en ce que**
- le système d'axe aérodynamique (33) est fixe dans la représentation, l'observateur regardant dans la direction de la trajectoire de vol instantané (axe Xₐ, vecteur de direction de vol) de l'avion représenté (5 ; système de coordonnées solidaires de l'avion 32),
- le terrain (3) est représenté suivant la trajectoire de vol instantané comme modèle à quadrillage ou en trois dimensions et cela ressort de l'orientation de la représentation (système de coordonnées géodésiques 31 : X_{G}, Y_{G}, Z_{G}) provenant de la rotation du système de coordonnées géodésiques (X_{G}, Y_{G}, Z_{G} ; 31) par rapport au système de coordonnées aérodynamiques (33),
- l'avion représenté (5 ; système de coordonnées solidaires de l'avion 32) est la projection d'un avion tourné par rapport au système d'axes aérodynamiques (33) d'un angle d'incidence (35) et de dérive (36), instantanés.

2. Présentation pour un afficheur de pilotage avec la représentation d'un terrain (3) ayant un horizon (8) et un symbole d'avion (5) selon la revendication 1,
**caractérisée en ce que**
le centre du système d'axes aérodynamiques (33) est le centre de l'afficheur.

3. Présentation pour un afficheur de pilotage avec la représentation d'un terrain (3) ayant un horizon (8) et un symbole d'avion (5) selon l'une des revendications précédentes,
**caractérisée en ce que**
l'angle d'inclinaison de vent de vol est représenté par une représentation à échelle (10h) et un index (10i) pour afficher l'angle d'inclinaison de vent de vol, instantané dans la moitié supérieure de l'écran.

4. Présentation pour un afficheur de pilotage avec la représentation d'un terrain (3) ayant un horizon (8) et un symbole d'avion (5) selon l'une des revendications précédentes,
**caractérisée en ce qu'**
on a tracé une graduation de l'angle d'inclinaison de trajectoire (9), une ligne de référence (10b) de la graduation de l'angle d'inclinaison de trajectoire (9) circule le long de l'horizon (8) et lorsque l'angle d'inclinaison de trajectoire augmente dans l'afficheur de pilotage l'horizon (8) s'abaisse vers le bas, et à partir d'une certaine amplitude de l'angle d'inclinaison de trajectoire, l'horizon (8) disparaît de l'afficheur de pilotage.

5. Présentation pour un afficheur de pilotage avec la représentation d'un terrain (3) ayant un horizon (8) et un symbole d'avion (5) selon l'une des revendications précédentes,
**caractérisée en ce que**
dans la représentation du terrain on a indiqué les points d'orientations essentielles pour le pilote.

6. Présentation pour un afficheur de pilotage avec la représentation d'un terrain (3) ayant un horizon (8) et un symbole d'avion (5) selon l'une des revendications précédentes,
**caractérisée en ce qu'**
on représente les surfaces de commande primaires de l'avion (5) ainsi que leur déplacement instantané.

7. Présentation pour un afficheur de pilotage avec la représentation d'un terrain (3) ayant un horizon (8) et un symbole d'avion (5) selon l'une des revendications précédentes,
**caractérisée en ce qu'**
on représente en outre les surfaces de commande secondaires ainsi que leur réglage instantané.

8. Présentation pour un afficheur de pilotage avec la représentation d'un terrain (3) ayant un horizon (8) et un symbole d'avion (5) selon l'une des revendications précédentes,
**caractérisée en ce que**
l'afficheur de pilotage comporte en outre un cadre (7) teinté pour afficher des signaux d'avertissement dans une couleur prédéfinie.
